# EUROPEAN PATENT APPLICATION

(11) **EP 4 586 169 A1**
(43) Date of publication of application: **16.07.2025**
(21) Application number: 24151343.1
(22) Date of filing: 11.01.2024
(51) Int. Cl.: G06Q 20/20, G06V 20/00, G06V 40/00, G07G 1/00, G07G 1/01, H04N 7/18

(54) **METHODS AND DEVICES FOR SELF-SERVICE TERMINALS**

(71) Applicant: Diebold Nixdorf Systems GmbH, 33106 Paderborn (DE)
(72) Inventor: GHARIBI, Arash, 10557 Berlin (DE); WIDMAIER, Dominik, 10715 Berlin (DE)
(74) Representative: Viering, Jentschura & Partner mbB Patent- und Rechtsanwälte

(57) **Abstract**

A self-service terminal may include a display interface couplable to a display; a video interface configured to receive a plurality of video streams comprising a first video stream comprising visual data of an operation area of the self-service terminal from a first point of view and a second video stream comprising visual data of the operation area of the self-service terminal from a second point of view; and a processor configured to: determine an activity of a user interacting with the self-service terminal; select at least one stream from the plurality of video streams based on the activity of the user; and generate display data comprising received visual data of the at least one stream.

## Description

### Technical Field

Various aspects relate generally to methods and devices for a self-service terminal (SST), in particular, an SST.

### Background

SSTs are automated systems designed to enable users to independently access services or perform tasks without direct human assistance. They're utilized across various industries, offering users a convenient and efficient way to interact with systems, conduct transactions, or obtain services without needing continuous human support.

One prevalent example of an SST includes self-checkout (SCO) terminals commonly found in retail settings (e.g. retail markets). These terminals allow customers to scan and pay for their items without an assistance (e.g. unassisted) from retail operators, such as cashiers. Through the employment of user-friendly interfaces and scanning technology, SCO terminals may empower customers (i.e. users) to handle their purchases autonomously. SCO terminal may provide an environment for the customers to complete check out process faster and anonymously, while reducing personnel costs for the retail markets. By including aspects, such as barcode scanning and payment processing, these terminals may provide a quicker alternative to traditional cashier-led transactions, and may reduce wait times and give customers more control over their shopping experiences.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an illustrative example of a retail environment;
FIG. 2 shows schematically an illustrative example of an SST;
FIG. 3 shows schematically an illustrative example including a processor of an SST;
FIG. 4 shows an illustrative example of a flow diagram;
FIG. 5 schematically shows an SST including an operator interface;
FIG. 6 shows schematically an illustrative example of an established connection between an SST and a further device;
FIG. 7 shows schematically an illustrative example of a system including multiple SSTs;
FIG. 8 shows schematically an illustrative example of a system;
FIG. 9 shows schematically an illustrative example of an SST;
FIG. 10 shows an example of a method.

### Description

The following detailed description refers to the accompanying drawings that show, by way of illustration, exemplary details and aspects in which aspects of the present disclosure may be practiced. Aspects described herein are not necessarily mutually exclusive, as some aspects may be combined with other aspects to form further aspects. Various aspects may have been described in accordance with aspects associated with methods and various aspects may have been described in accordance with aspects associated with devices, but this should not be taken as limiting as the aspects described in accordance with methods apply to devices, and vice versa. Throughout the drawings, it should be noted that like reference numbers may be used structured similarly to depict the same or similar elements, features, and structures.

In retail markets, security monitoring is one of the critical aspects to ensure the safety of both customers and assets, including items presented for transactions. One fundamental component of this surveillance may include the strategic placement of security cameras throughout the store premises. These cameras may serve as eyes, and may capture real-time footage of designated areas within the store, including entrances, aisles, cash registers, SSTs, and high-value product sections. Through their positioning and the sense of surveillance on human subjects, these cameras may act as a deterrent to potential theft or vandalism, while also providing invaluable footage for post-incident investigations and evidence collection.

Security monitors may be used to stream and monitor the visual data (e.g. footage) captured by these security cameras. Illustratively, security monitors may be stationed in a designated area such as a security office or a surveillance room. These monitors may display live feeds from multiple cameras, to allow operators such as the security personnel or designated staff to observe activities across different sections of the store simultaneously. Various methods may be employed to identify suspicious behavior, respond to potential security threats, and take proactive measures to prevent incidents or address them swiftly.

Moreover, modern security monitoring systems in retail markets may integrate advanced features such as motion detection, facial recognition, and analytics software. A security monitoring software may enhance surveillance capabilities through application of motion detection, facial recognition and analytics by automatically flagging unusual movements or behaviors, identifying individuals of interest, and providing real-time alerts to security personnel.

An implementation of a security monitoring system within a retail environment may serve multiple purposes. In some aspects, security monitors may also be provided within the retail environment in a configuration that they are visible to customers in order to enhance transparency and to foster a sense of security and trust among customers. The security monitoring system may display live or recorded footage within the retail environment to act as a visual deterrent to potential theft and/or misconduct. Accordingly, customers might be less inclined to engage in suspicious behavior by knowing they are being monitored, which may result in a secure shopping experience and may reduce instances of shoplifting or unauthorized activities.

On the other hand, while displaying captured visual data to customers can promote a sense of security, it may be essential to balance the displaying in accordance with the privacy considerations. Customers may feel uncomfortable or may perceive it as an invasion of privacy if they believe their every move is being closely watched. Moreover, such a display may further be utilized for informative or promotional content.

In accordance with various aspects provided herein, SSTs (e.g. SCO terminals) may be utilized to display video footages of respective users of the SSTs. An SST may be configured to receive video streams provided by cameras deployed to monitor an operation area associated with the SST and display received video stream through a display provided on the SST, which may be illustratively the same display through which the user can interact with the SST. In some examples, the SST may include a security monitor provided on the SST visible to the user of the SST.

Through displaying of received video streams including visual representation of the user of the SST, users of the SST may recognize that they are being watched. Noting that various aspects provided herein may allow the SSTs to obtain multiple video streams which may be configured to include visual representation of the user from different point of views (PoVs), users may have the indication of an extensive monitoring by being displayed of the captured visual data of the user from multiple PoVs.

Sources of the above-mentioned video streams may include image acquisition devices which are exemplified as cameras throughout this disclosure, which may be configured to capture video images of an operation area associated with one or more SSTs. The term "operation area" may refer to a physical space or zone where a customer (i.e. a user) may interact with the one or more SSTs, for example to complete a transaction (e.g. a purchase of an item). An operation area may include a designated vicinity around the one or more SSTs, where a user may interact with the one or more SSTs, and optionally with designated devices of the one or more SSTs to perform actions related to the transaction.

Illustratively, an operation area may include a scanning zone. A scanning zone may include a designated zone where a user may place items to rest prior to a scanning operation, and/or where the user may use a scanning device (e.g. a barcode or a QR code scanner). An operation area may include a bagging zone where the user may move items after their respective scanning operations. An operation area may include a payment zone where the user may make payments/deposits for the transaction. The payment zone may include one or more card readers, cash handling devices (e.g. to receive or provide cash), contactless payment terminals, etc. An operation area may include a user interfacing zone including devices through which the user may interact with the SST. The user interfacing zone may include a display (e.g. a touchscreen display), one or more buttons, switches, haptic feedback providing devices, etc. An operation area may include a designated zone which the user may stand and/or sit down to interact with the SST.

It is to be noted that the operation area may be designated in accordance with one SST or in accordance with multiple SSTs according to a desired use case. As indicated above, the operation area may include multiple designated zones, and in accordance with aspects described herein, image acquisition devices may be deployed to capture video images of one or more zones of the multiple designated zones, a single designated zone of the multiple designated zones, a portion of one or more designated zone of the multiple designated zones.

In some examples, an image acquisition device, as a source of a video stream, may be a movable image acquisition device and may be configured to capture different zones in different time periods. For example, a pan-tilt-zoom (PTZ) camera may change its viewing angle or direction to cover different zones. In some examples, sources of the video streams may include cameras deployed within the housing of the SSTs and/or on the SSTs. In some aspects, sources of the video streams may include cameras deployed within the retail environment to capture designated zones of the operation area.

In accordance with various aspects described herein, SSTs may display one or more visual data received from multiple video streams selectively in a dynamic manner. For example, based on a determined activity of a user interacting with an SST, the SST may display visual data of a video stream associated with the determined activity. Illustratively, when a user interacts with the SST within the scanning zone, the SST may display a video stream providing visual data of the scanning zone, and when the user interacts with the bagging zone, the SST may display a further video stream providing visual data of the bagging zone. Through this dynamic operation, the SST may switch between available video streams based on the activity of the user. In some examples, the SST may further provide information to the security monitoring system, which the provided information represents video streams currently being displayed by the SST.

The present disclosure may include various methods, functions, processes, etc. They may be performed by hardware components (e.g. a processor and/or a control device as described herein) or may be provided in computer-readable instructions which, if executed by a general purpose or special purpose processor or other logic circuits, cause the respective processor or logic circuits to perform them.

The term "processor" in this disclosure may refer to any entity capable of processing data and/or signals. Illustratively, the processor may execute designated functions that process data and/or signals in a designated manner. A processor can encompass various forms, such as analog circuits, digital circuits, analog and digital circuits, logic circuits. A processor may include one or more of: microprocessors, Central Processing Units (CPUs), Graphics Processing Units (GPUs), Digital Signal Processors (DSPs), Field Programmable Gate Arrays (FPGAs), Application Specific Integrated Circuits (ASICs), as examples, or any combination thereof. Any other kind of implementation of the respective functions, some of which may have been described in this disclosure in further detail, may also be understood as a processor, controller, or logic circuit. It is further to be noted that that a plurality of the processors, controllers, or logic circuits described herein may be referred to as a single entity with equivalent functionality or the like, and conversely that any single processor, controller, or logic circuit detailed herein may be realized as two (or more) separate entities with equivalent functionality or the like.

The term "control device" (also referred as to controller) may be understood as any kind of a logic implementing entity, which may be special purpose circuitry or a processor executing software stored in a memory, firmware, or any combination thereof. Thus, a "control device" may refer to a processor and/or may include a hard-wired logic circuit or a programmable logic circuit such as a programmable processing entity, a microprocessor (e.g. a Complex Instruction Set Computer (CISC) processor or a Reduced Instruction Set Computer (RISC) processor). A "control device" may, additionally or alternatively, include one or more processors executing software, e.g. any kind of computer program.

The control device may be configured to control one or more components of the SST or devices communicatively coupled to the SST, illustratively by instructing the one or more components or the devices communicatively coupled to the SST. For this purpose, the control device may generate an instruction (e.g., a message, a signal, i.e. an encoded information) and transmit the instruction. The control device may optionally include a memory configured to store information required for the control device to implement the described aspects.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of signals, e.g., electrical currents) and logical transmission (e.g., the transmission of digital data over a logical software-level connection). For example, a processor or controller may transmit or receive data over a software-level connection with another processor or controller in the form of signals, where the physical transmission and reception is handled by signal-layer components such as transceivers, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations. In various aspects, the communication may include use of a designated communication protocol for exchange of information.

The term "user interface" (herein also referred to as UI) may be understood as any type of component, hardware or software or a combination thereof, that is configured to interact with a user in a designated manner with the corresponding entity (e.g. SST). The user interface may encompass all elements, features, and/or mechanisms that enable a user to communicate, control, and/or operate the corresponding entity to accomplish designated tasks or access information. Illustratively, a user interface may facilitate the exchange of information (e.g. instructions, messages, etc.) between the interacting user and the corresponding entity, illustratively by providing a visual, a tactile, an audible interface, through which the user may input instructions, access information, and navigate functionalities. For example, the user interface may include hardware components (e.g. input and/or output devices, through which the user can provide inputs and receive outputs respectively) and software components (e.g. a graphical user interface, drivers, etc.), which may operate with an operating system of the corresponding entity.

In the following reference is made to an SCO terminal as exemplarily SST for demonstrative purposes, which is not intended to be limiting. The SCO terminal may be disposed in a retail environment. The retail environment may include a market area, in which various types of items are stored and provided for collection of a customer. One or more SCO terminals may be disposed at the exit of the retail market. Once at the SCO terminal, the customer can locate items being purchased in the scanning zone and scan barcodes of the items being purchased. Further the customer can place scanned items in the bagging zone, which the bagging zone may include a bagging container including an optional weighing scale, so that it may be verified that the weight of a placed item matches stored weight information for the corresponding scanned item.

According to various aspects, an SCO terminal may be configured to perform a scanning procedure. In a scanning procedure, the SCO terminal may identify items that a customer wants to purchase. Identification of items may include scanning items via an item scanning device (e.g. a barcode scanner). An SCO terminal may display scanned items, prices, and quantities via its user interface (e.g. a display and a graphical user interface (GUI)) as they are added to the transaction via scanning. The SCO terminal may register scanned items for the transaction.

According to various aspects, the SCO terminal may be configured to perform a verification procedure. In a verification procedure, the SCO terminal may verify items scanned via the item scanning device. Verification of items may include weighing scanned items placed into the bagging container. Illustratively, the bagging container may be disposed a weight sensor that measures weight of the items placed in the bagging container. The SCO terminal may perform further verification of items, which may be performed through more sophisticated methods, such as object detections. In some examples, the verification of items may include price verification, through application of discounts, promotions, loyalty points, etc.

According to various aspects, the SCO terminal may be configured to perform a payment procedure. In a payment procedure, the SCO terminal may seek authorization from a payment provider or a bank for a financial transaction initiation received from the customer (e.g. via a credit or debit card, via contactless payment, etc.). The SCO terminal may communicate with a remote server to indicate the financial transaction initiation and to receive an authorization for the financial transaction. Once the financial transaction is authorized, the SCO terminal may complete the transaction. For cash payment options, the payment procedure may include receiving cash (e.g. banknotes, coins, etc.) from cash handling devices, verification of received cash, calculation of total received cash, disposing remainder change in view of the received cash and the amount of the transaction from the cash handling device, etc.

According to various aspects, the SCO terminal may be configured to perform an inventory procedure. In an inventory procedure, the SCO terminal may communicate with a Point-of-Sale (POS) system to obtain information about scanned items (e.g. price, item description, weight information, etc.), adjust the quantity of an item within the inventory, receive information about promotions, discounts and/or loyalty points, provide information about the transaction, etc.

The references made to the SCO terminal may analogously apply to other types of the SSTs. One or more of the functions, methods and/or aspects performed by the SCO terminal may be analogously performed by an SST. Examples of an SST include: Automated Teller Machine (ATM), banking terminal, self-service vending machine (e.g., for snacks, alcohol, cigarettes and/or jewelry), SCO terminal, self-service gas station, self-service scale, and/or a slot machine.

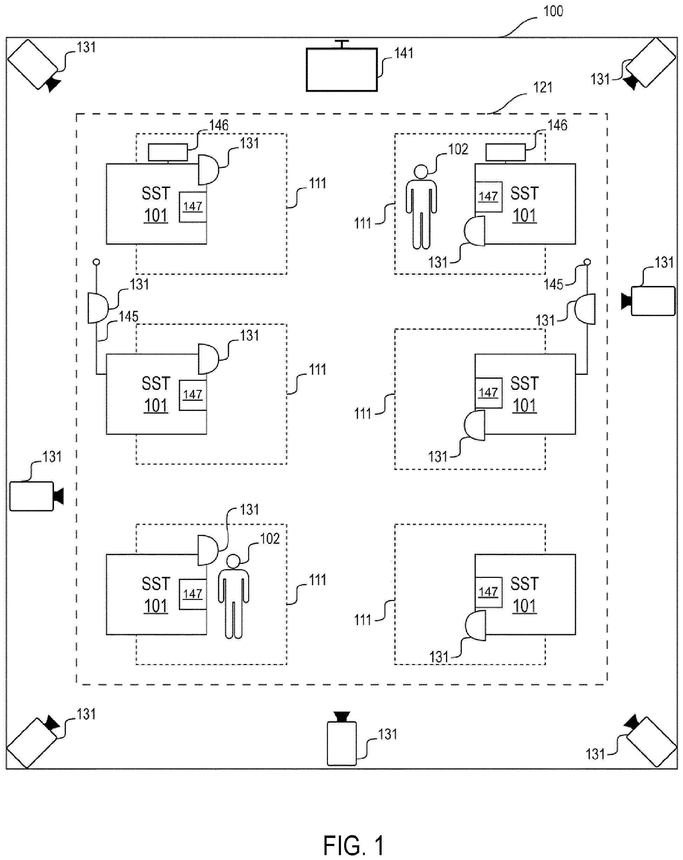

FIG. 1 shows an illustrative example of a retail environment. The retail environment 100 may include a plurality of SSTs 101 (e.g. SCO terminals) configured to provide self-checkout services in a designated operation area 121. Although the example illustrates 6 SSTs 101, the retail environment 100 may include any number of SSTs 101. Furthermore, although the example illustrates the SSTs clustered or cumulated in one designated operation area 121, the retail environment 100 may include any number of operation areas 121, designated for one or more SSTs 101. Furthermore, each SST 101 may have associated, other than the designated operation area 121, a specific operation area 111 designated for that particular SST 101. Illustratively, the specific operation area 111 may be designated for users 102 of the SSTs 101, in which users 102 may interact with the SSTs 101 (e.g. place items for scanning procedure, scan items, use the user interface of the SSTs 101, place items in bagging containers, receive receipts from the SSTs 101, etc.).

Those cameras may monitor an area of interest within the retail environment for security. Exemplary, a camera may be mounted on a SCO terminal to capture real time images of a customer purchasing items at the corresponding SCO terminal. The camera, among other options, may be an internet protocol (IP) camera capable of capturing and transmitting video data over an IP network including internet, a local area network (LAN), etc. This functionality may be useful for an attendant of the retail store to stream and view the video feed using a computer remotely positioned from the camera such as the computer positioned in a management room within the retail store.

A plurality of image acquisition devices, illustrated as cameras 131, may be provided within the retail environment 100 for surveillance purposes. The cameras 131 may be disposed within the retail environment to monitor the designated operation area 121. One or some cameras 131 may have respective field of views (FoVs) configured to monitor the designated operation area 121, which may optionally monitor multiple respective specific operation areas 111 of multiple SSTs 101. One or some cameras 131 may have respective FoVs configured to monitor designated specific operation areas 111 of a single SST 101.

In some examples, one or more SSTs 101 may include one or more integrated cameras 131 to capture real time images of users 102 interacting with the corresponding SSTs 101. For example, each SST 101 may include one or more cameras 131 for various purposes, such as age verification, product recognition, shrinkage and/or fraud detection, and/or surveillance. Each camera of the plurality of cameras 131 may be configured to provide captured visual data of at least a portion of the designated operation areas 111, 121.

In some examples, some or all SSTs 101 may be associated with lighting fixtures 145, such as pole lights 145 to enhance visibility within the operation area of the SSTs and to improve security and safety. In some aspects, one or more of the pole lights 145 may include or act as status lights, i.e. visual indicators to convey information about usage of associated SSTs 101. For example, they may exhibit lights with different colors to indicate a certain status pertinent to an activity occurred at the respective SST. In an example, one or more of the pole lights 145 may exhibit a green light to indicate that a transaction is completed successfully and SST is ready for the next user or a yellow light to indicate that a checkout process is still in progress at the corresponding SST. Those lights, in that sense, may give users an indication about an ongoing and/or completed checkout process performed at the SSTs. In some aspects, one or more of the pole lights 145 may exhibit blinking lights in various colors for security purposes. In an example, one or more of the pole lights 145 may exhibit a blinking yellow light to indicate that the user interacting with the corresponding SST is in need of an assistance from staff or a blinking red light to alert the management and/or security units. In some examples, one or more cameras may be attached to the lighting fixture (e.g. above SSTs 101). For example, this camera may be configured to observe users interacting with the corresponding SST 101 from above the corresponding SST 101.

Each SST 101 may be configured to receive a plurality of video streams including captured visual data of at least some of the plurality of cameras 131. The transfer of the captured visual data of at least some of the plurality of cameras via video streams may be implemented through any known methods. In some examples, an SST 101 may be communicatively coupled to designated one or more cameras of the plurality of cameras 131 to receive respective video streams of the designated one or more cameras. In this illustrative example, each camera of the one or more cameras may be configured to encode the captured visual data and transmit the encoded captured visual data in a corresponding stream to the SST 101 over a corresponding established connection. In some examples, one or more cameras of the plurality of cameras 131 are configured to communicate with a video server to send the captured visual data to the video server. In this illustrative example, an SST 101 may be communicatively coupled to the video server, and the video server may provide designated (or all) video streams, each video stream including captured visual data of a corresponding camera of the one or more cameras to the SST 101.

In some examples, the retail environment 100 may include at least one security monitor 141. The security monitor 141 may be configured to display captured visual data of one or more cameras of the plurality of cameras 131. In some examples, the security monitor 141 may display visual data included in displayed video streams of at least one of the SSTs 101. For this purpose, the security monitor 141 may communicate with the at least one of the SSTs 101 to receive information representing displayed visual data of the at least one of the SSTs 101. In some examples, the security monitor 141 may display visual data included in displayed video streams of all of the SSTs. In a multiple displaying scenario, displayed screen of the security monitor 141 may be divided in regions, such that in each region a corresponding displayed visual data of one SST 101 of multiple SSTs 101 may be shown. In some examples, each of some or all SSTs 101 within the retail environment may further be associated with and/or include an external security monitor 146 (e.g. an external display).

Furthermore, each SST 101 may include a display device 147 that is different from the respective external security monitor 146 if exists. The display device 147 may be configured to provide information (e.g. transaction-related information) to users interacting with the SST 101 via a GUI. In accordance with various aspects described herein, the display device 147 may display visual data of selected video streams together with the transaction-related information over the GUI, while the corresponding external security monitor 146 may display the same visual data of the selected video streams (i.e. without the transaction-related information).

In some examples, the plurality of cameras 131 may communicate with the SSTs 101 or with the video server according to a designated communication protocol. Illustratively, at least some of the plurality of cameras 131, among other options, may be internet protocol (IP) cameras capable of capturing visual data and transmitting captured visual data over an IP network according to a designated communication technology using a designated communication protocol, such as a local area network (LAN), a wireless LAN (WLAN), cellular communication (3G, 4G, 5G, 6G), Bluetooth, etc. In some examples, the plurality of cameras 131 may send captured visual data according to a designated video transmission protocol, such as Real-Time Streaming Protocol (RTSP), Open Network Video Interface Forum (ONVIF), etc.

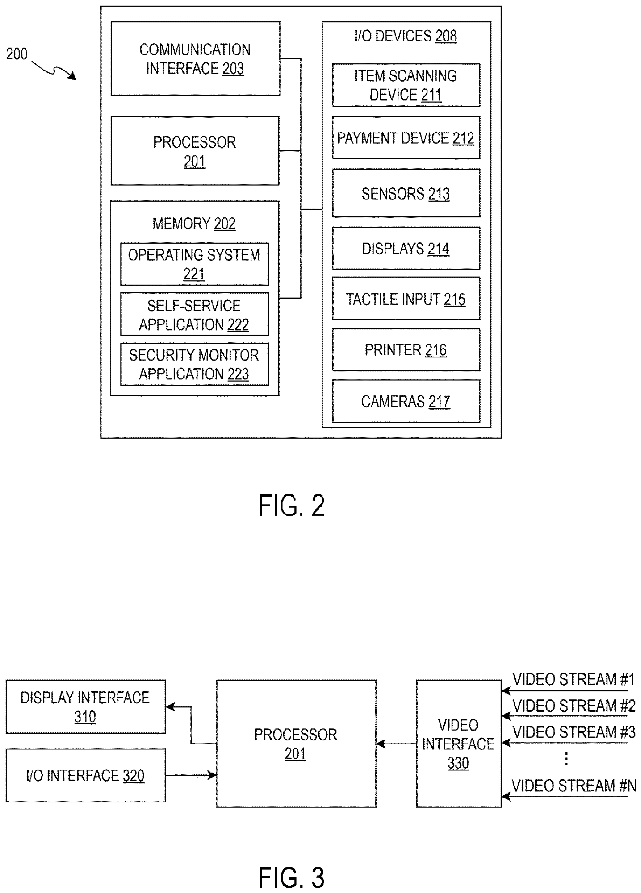

FIG. 2 shows schematically an illustrative example of an SST. The SST 200 may include a processor 201 to perform a variety of tasks in accordance with various aspects described herein. The processor 201 may include one or more processing means, the processor may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 201 may be implemented in one processing unit, e.g. a system on chip (SOC), or a processor. In some examples, the processor 201 may include one or more cores as computation units, an arithmetic logic, a control unit, a storage unit, a plurality of registers, etc. The SST 200 may further include a memory 202. In some examples, the processor 201 and the memory 202 may form a control device, or alternatively a portion of the control device as described herein. The processor 201 and the memory 202 may be communicatively coupled to each other via an internal interface.

The SST 200 may further include a communication interface 203. The communication interface 203 may be configured to transmit and/or receive communication signals from a communication medium according to one or more communication technologies to communicate with other devices within the retail environment, which other devices may include some I/O devices or sensors (e.g. cameras) as described below, a video server, further SSTs within the retail environment, a security monitor, a security monitoring system, etc. The communication interface 203 may be configured to communicate with the other devices using wireless communication technologies (e.g. WLAN, cellular, Bluetooth, etc.) or wired communication technologies (e.g. USB, LAN, serial ports, etc.). The communication interface 203 may communicate with the other devices according to designated communication protocols.

The memory 202 may store instructions of an operating system (OS) 221. The OS may include instructions that may cause the processor 201 to manage and control hardware components of the SST (e.g. the processor 201, the memory 202, the communication interface 203, the I/O devices 208) and their operations, to facilitate communication between different hardware components, and to enable execution of applications (e.g. self-service application 222, security monitor application 223, which these operations may be provided by the processor performing OS functions.

The memory 202 may further store instructions of a self-service application (SSA) 222. The SSA 222 may include instructions that may cause the processor 201 to perform various operations associated with the performance of the transaction (e.g. purchase transaction). The processor 201 may, via execution of these instructions, perform SSA functions, with which the processor 201 may perform aspects described herein to perform the transaction of the user. Illustratively, SSA functions may obtain item information from a POS system connected via the communication interface 203, store the list of scanned items, determine purchase information, generate GUI to be displayed with self-service GUI information, control procedures of the transaction based on received user inputs, etc., which may include receiving and sending information to the I/O devices 210.

The memory 202 may further store instructions of a security monitor application (SMA) 223. The SMA 223 may include instructions that may cause the processor 201 to perform various operations which may include to receive a plurality of video streams, to determine and/or identify and/or monitor activities of an interacting user, selecting one or more video streams among the plurality of video streams, providing information of selected video streams to be sent to other entities, such as to the SSA functions, the OS functions, and/or other devices (e.g. further SSTs, an external security monitor, a security monitoring system), generation of display data including selected one or more video streams, and the like.

The SST 200 may further include one or more input and output (I/O) devices 210 that are communicatively coupled to the internal interface and/or the communication interface 203. It is depicted in the illustrative example that the SST 200 includes I/O devices 210, however, this should not be taken as limiting, and the I/O devices 210 may be communicatively coupled to the SST 200 via the communication interface 203 configured to communicate with the I/O devices 210 according to designated communication rules, syntax, etc. such as a designated communication protocol.

The I/O devices 210 may include various hardware and/or software components to provide input to the SST 200, in particular in the form of information (e.g. instructions, messages, raw data, streams, etc.) for the processor 201 to process received input information to associate received input information for designated instructions. The I/O devices 210 may include input devices that are designated based on the use case of the SST 200. In some examples, the I/O devices 210 may include one or more buttons (e.g. a keypad, a keyboard, buttons with designated functions, etc.). The provided input may include, for example, information representing an interaction of a user using the respective input device (e.g. information representing a pressed button of the keypad or keyboard). Exemplarily, a customer may use a keypad to enter an item number or a personal identification number (PIN) of a credit or a debit card, or a keyboard may be one of the I/O devices 210 delivering user interactions by receiving keystrokes, or a touchpad may be one of the I/O devices 210 delivering user interactions by receiving touch inputs, etc.

The I/O devices 210 may be configured to provide an output based on instructions executed by the processor 201. The I/O devices 210 may include output devices that are designated depending on the use case of the SST 200. The provided output may include, in particular, an output to present various types of information or indications for a user. For example, a display may be one of the I/O devices 210 configured to display visual information to the user in form of images, text, pictures, videos, etc.

It should be noted that an I/O device may be both an input device and an output device for the SST 200 within this context. For example, one of the I/O devices 210 may include a display configured to provide a visual output to a user. Furthermore, the display may be a touch screen display that is configured to receive input from the user interacting with the display. The contact interaction from the user may be detected by a touch input device. The touch input device may be configured to detect the interaction of the user with the display via a contact of the user. The touch input device may be configured to detect contact and/or movement of the user (e.g. via a finger, via a stylus, etc.,) while touching the display. Alternatively, the touch input device may be configured to detect the interaction of the user via another defined surface. For example, the touch input may include a touchpad that is configured to receive input from the user. Accordingly, such a display may be both an example of an input device and an output device.

The I/O devices 210 may include an item scanning device 211 configured to scan one or more items. Illustratively, the item scanning device 211 may be operated by the user in a scanning procedure. For example, the item scanning device 211 may include an optical scanning device, an RFID (radio-frequency identification) scanning device, or the like. The optical scanning device may illustratively include a barcode scanning device or an image scanning device. The barcode scanning device may include respective sensors to implement the scanning functionality, such as one or more infrared sensor, one or more cameras, and the like.

Illustratively, an item (e.g. transaction item) may have distinguishable characteristics, such as identifiers associated with the item in a designated form. For example, items may be provided with a barcode, a QR code, an RFID-tag, etc. The item scanning device 211 may detect these identifiers and provide information representative of an identifier of a scanned item to the processor 201 (i.e. to SSA functions). The processor 201 may, via SSA functions, determine transaction information based on the identifier of the scanned item. Illustratively for each scanned item, the processor 201 may determine (e.g. by receiving from a POS system or an item database) respective item information including item price, item description, item quantity, weight information, etc. of the respective scanned item using the respective identifier, and store the item information into the memory 202 for an established purchase transaction.

As the user scans each item of the transaction, the processor 201 may store the item information in a list (e.g. in the memory 202) as purchase information. The control device 106 may be further configured to determine payment information 204 based on the purchase information (e.g., the list 202 of products), e.g., considering the number of products and/or the amount to be paid for each of the products. Illustratively, the payment information 204 may represent the total amount to be paid for the products as registered by the SST 100.

The I/O devices may include a payment device 212. The payment device 212 may be configured to interface the user to receive a payment for the transaction. In some examples, the payment device 212 may include a card reader to read financial information stored in a credit card and/or a debit card. The card reader may read financial information and the SST 200 (e.g. via a communication circuitry of the payment device 212 itself or through the communication interface 203) may seek authorization from a payment provider or a bank for a financial transaction initiation received from the user, through communication with a remote server. Illustratively, the SSA functions may provide information about the financial transaction (e.g. amount of financial transaction) to the payment device 212. Once the financial transaction is authorized, the payment device 212 may indicate the authorization of the financial transaction. The card reader may be configured to read financial information from cards in any known methods, such as through magnetic reading (e.g. via magnetic strips of the card) and/or electrical reading (e.g. via chips of the card), and/or contactless reading (e.g. NFC). For cash payment options, the payment device 212 may include a cash handling device configured to receive cash (e.g. banknotes, coins, etc.), verify received cash, calculate total amount of cash received for a financial transaction, dispose remainder change in view of the received cash and the amount of the transaction from the cash handling device, etc.

The I/O devices 208 may further include sensors 213 configured to monitor the operation area associated with the SST 200. In accordance with various aspects provided herein, the SSA functions and/or the SMA functions may receive sensor data from the sensors 213. For example, the processor 201 may verify certain activities of the transaction based on sensor data received from the sensors 213, which may include measurements that are depending on types of the sensor of the operation area. As illustrated before, one of the sensors 203 may include a weight sensor provided in the bagging area. The weight sensor may be configured to measure weight of items placed into the bagging container. Based on sensor data provided by the weight sensor, the processor 201 may verify if the item placed into the bagging container is a scanned item based on item information (i.e. weight information) of the scanned item. The processor 201 may further detect if a non-scanned item is placed into the bagging container, illustratively if an item is placed into the bagging container without scanning or if a detected weight change differs substantially from the weight of a scanned item. The sensors 213 may further include various types of sensors, such as motion sensors, proximity sensors, infra-red (IR) sensors, and the like. In some cases, the sensors 213 may include RFID sensors that may be used to recognize items with an RFID tag attached to them.

The I/O devices 208 may further include cameras 217A217 (e.g. the cameras 131). In some examples, one or more cameras of the cameras 217A217 may be integrated within the SST 200 or attached to the housing of the SST 200. In accordance with various aspects provided herein, the processor 201 may, via the SSA functions and/or the SMA functions, receive visual data from the cameras 217. In some aspects, the cameras 217 may operate as peripheral devices. Exemplary, as the sensors 213 may be used as a means to be utilized in a checkout process or a certain step of a respective checkout process, the cameras 217 may be used as peripheral devices monitoring the results and/or outputs of the process involving the use of a corresponding sensor (e.g., weight sensor). For example, one of the integrated cameras may be configured for detection of fraud and/or shrinkage. Illustratively, the camera for fraud/shrinkage detection may be configured to monitor an area (e.g. a portion of the operation area), such as the vicinity of at least one of the payment device 212 or the item scanning device 211, or the user of the SST 200. The processor 201 may receive visual data of the camera for fraud/shrinkage detection and provide received visual data to an input of a fraud/shrinkage detection algorithm which the processor 201 may execute.

In some examples, one of the integrated cameras may be configured for item detection. Illustratively, the camera for item detection may be configured to capture images of items in accordance with the requirements of the transaction (e.g. camera may capture item scanning area, item bagging area, etc.). The processor 201 may receive visual data of the camera for item detection and provide received visual data to an input of an item recognition algorithm. The processor 201 may apply various feature extraction algorithms to extract identifiable physical attributes of an item and compare extracted features from visual data with features of items stored in an item database to recognize an item detected in received visual data. The processor 201 may use information about the recognized item to validate scanned and/or paid items of a transaction.

In some examples, one of the integrated cameras may be configured for capture face and/or body of the user interacting with the SST 200. For example, the processor 201 may receive visual data of the camera and use received visual data of this camera for behavior analysis of the user. In some examples, the processor 201 may analyze received visual data to estimate an age of the user.

The cameras 217 may be configured to capture real time images of the operation area, which may in operation may include the SST 200, some of the I/O devices 208, the interacting user, and items. Illustratively, the cameras 217 may be IP cameras, USB cameras, or any other types of cameras. Additionally, or alternatively, one or more cameras may be positioned within the retail environment to monitor the operation area associated with the SST 200.

In some examples, the SST 200 may communicate with one or more cameras via the communication interface 203. In this example, the SST 200 may have established connections with the one or more cameras to receive visual data of the one or more cameras respectively through established connections. In some examples, the SST 200 may receive visual data of one or more cameras from a video server. Illustratively, in this example, the one or more cameras may send their respective visual data to the video server, and the SST 200 may receive, via the communication interface 203, visual data of the respective cameras from the video server. In various aspects, the SST 200 may receive all visual data of the plurality of cameras 217. The processor 201 may cause the communication interface 203 to receive visual data of selected one or more video streams of respectively selected one or more cameras.

I/O devices 208 may further include one or more display devices 214 configured to provide visual information to the user. The display device 214 may include a touch screen display configured to receive touch inputs from the user. The processor 201 may generate data to be displayed on the display device 214. In accordance with various aspects provided herein, the display device 214 may be communicatively coupled to the processor 201 through the internal interface. In some examples, the one or more display devices 214 may include an external display external to the SST 200, which the external display may be provided within the retail environment, or attached to the housing of the SST. In various aspects, the SMA functions and/or SSA functions may provide information included in the display data.

The display device 214 may include any type of display configured to provide information and facilitate user interactions. Illustratively, the display device 214 may include a liquid crystal display (LCD), a light-emitting diode display (LED), an organic LED (OLED), or a electronic-ink display.

The I/O devices 208 may further include tactile input devices 215 to receive user input. Illustratively, the tactile input devices 215 may include a keyboard, a keypad, and/or buttons with designated functions. Furthermore, the I/O devices may include a printer 216 configured to print our receipts, coupons, based on operations associated with the transaction.

In accordance with various aspects described herein, the SST 200 may include a user interface accessible to the user, which may be configured to receive user input, through designated interactions of the user, and which may be configured to provide visual, audible, or tactile output related to the transaction to the user. The user interface of the SST 200 may include designated I/O devices, some of which have been described herein, such as the display device 214, the tactile input devices 215, the payment device 212, etc., and further a GUI which the processor 201 may generate based on GUI information stored in the memory 202. Illustratively, through interactions of the user with designated I/O devices, the processor 201 may receive, via OS functions information representing these transactions, and the OS functions may provide corresponding information representing these transactions to the SSA functions and/or SMA functions.

FIG. 3 shows schematically an illustrative example including the processor 201 of the SST 200. In accordance with various aspects described herein, the processor 201 may be configured to determine an activity of a user interacting with the SST 200. An activity of a user (and correspondingly the term user activity) may include an action, a behavior, and/or interaction of the user, which may be identifiable through various methods used to ascertain an activity to a human. An activity of a user interacting with the SST 200 may encompass designated actions and behaviors of the user, through analysis or detections, to determine an engagement of the user with the SST 200 and/or the transaction.

In accordance with various aspects described herein, determination of activities of the user interacting with the SST 200 may include a selection of an activity from a plurality of predefined activities. For example, the processor 201 may select one of the activities from the plurality of activities through a classification operation, which the selected activity may be estimated to be most-fit for the current situation. Illustratively, the plurality of activities may include an item scanning activity (a scanning of an item), an item bagging activity (a bagging of a scanned or non-scanned item); a payment activity (e.g. an involvement of a payment procedure), and/or a user interface interaction activity (e.g. an interaction with a user interface).

The processor 201 may determine the activity of the user interacting with the device through various methods. For example, the processor 201 may receive information from an I/O device 208 via an I/O interface 320 communicatively coupled to the I/O devices 208, which the received information may include an indication that the user has interacted with the I/O device 208. For example, the memory 202 may include information mapping I/O devices 208 to predefined activities, and the processor 201 may select the predefined activity according to the information mapping I/O devices 208 to predefined activity for that I/O device 208 which indicates the interaction.

In some examples, the processor 201 may determine the activity of the user based on identified interaction patterns. Illustratively, the processor 201 may analyze how the user has navigated the SST 200 through information received from multiple I/O devices indicating a presence of interaction, and the sequence of actions that the user has performed. In some examples, the processor 201 may determine the activity further based on the flow of the transaction of the user. In some examples, the processor 201 may further evaluate the time spent at a first determined activity, and through designated procedures of the transaction that may likely follow the first determined activity, the processor 201 may determine a second activity, illustratively with an expiration of a timer after determination of the first determined activity.

In some examples, the processor 201 may determine the activity of the user based on received sensor data from the sensors 213. Illustratively, various types of sensors may be configured to provide measurements of certain portions of the operation area of the SST 200. Certain sensors and/or measurement results of certain sensors may have been designated for certain activities. The processor 201 may, based on received sensor data from the sensors 213, determine the activity of the user. The processor 201 may monitor received sensor data to identify measurement results indicating a designated activity of the user. For example, a proximity sensor may be configured to detect a presence of an object within a designated proximity to the item scanning device 211. When the user approaches the item scanning device 211 to scan an item, the processor 201 may identify that there is a proximate object detected by the proximity sensor designated to monitor the item scanning device 211, and accordingly determine the activity of the user as the item scanning activity.

In some examples, the processor 201 may determine the activity of the user based on visual data received from a plurality of cameras (e.g. the cameras 131, the cameras 217). The processor 201 may perform image processing techniques to determine an activity of the user. The processor 201 may identify designated features, such as shapes, contours, object sizes, movement patterns, and/or spatial relationships within received visual data and classify activities based on identified patterns of the designated features.

The SST 200 may include a video interface 330 configured to receive a plurality of video streams, as described herein. The plurality of cameras may be configured to monitor the operation area of the SST 200, which may be sources of the video streams. Each video stream may include visual data of one of the cameras, which may capture the operation area or a portion of the operation area from a corresponding designated PoV. In some examples, the video interface 330 may include the internal interface and/or the communication interface 203 of the SST 200.

Each camera may have its designated FoV configured to capture the operation area or a portion of the operation area. In operation, designated FoV of certain cameras may be configured to capture designated I/O devices 208, and/or designated areas within the operation area which may include at least a portion of the user. In this constellation, the SST 200 may access various video streams configured to capture the operation area, in particular, the SST 200, the I/O devices 208, and the user interacting with the SST 200 from different angles, heights, and ranges, which may provide an extensive surveillance of the operation area of the SST 200.

In accordance with various aspects described herein, each video stream (e.g. each camera) may be associated with one or more designated user activities of a plurality of designated user activities. Illustratively, each camera may be configured with a corresponding FoV that is designated to capture certain user activities. For example, there may be a plurality of predefined user activities for the plurality of cameras, and each camera may be associated with a subset of predefined user activities, in which the subset may include one or more predefined user activities. In some examples, the plurality of predefined user activities may be the same activities (i.e. the plurality of activities) that the processor 201 is configured to determine for the user interacting with SST 200. In some examples, the memory 202 may store activity mapping information including, for each activity of the plurality of activities, one or more user activities of the plurality of user corresponding to the respective activity of the plurality of activities. Noting that the plurality of cameras may include security cameras provided within the retail environment and/or integrated cameras of SSTs 200, a mapping for the SST 200 (e.g. mapping of available video streams and available cameras) may be configurable.

In order to illustrate this constellation, a first camera may be configured to monitor (i.e. its FoV includes) the item scanning device 211. Through a careful designation of a deployment location of the first camera, the first camera may be configured to capture the item scanning device 211 and its designated proximity and provide first visual data including captured video images of the item scanning device 211 and its designated proximity. A first video stream received by the video interface 330 may be associated with the first camera, and may include the first visual data. Correspondingly, the first video stream (and/or the first camera) may be associated with an item scanning activity.

Similarly, a second camera may be configured to monitor the designated bagging container for the SST 200. Through a careful designation of a deployment location of the second camera, the second camera may be configured to capture the bagging container and its designated proximity and provide second visual data including captured video images of the bagging container and its designated proximity. A second video stream received by the video interface 330 may be associated with the second camera, and may include the second visual data. Correspondingly, the second video stream (and/or the second camera) may be associated with an item bagging activity.

Moreover, a third camera may be configured to monitor the user interacting with the SST 200, who may likely stand in front of the SST 200. Through a careful designation of a deployment location of the third camera, the third camera may be configured to capture face and/or body of the user, for example when the user interacts with the user interface (e.g. the display device 214, the tactile input devices 215, the payment device 212) of the SST 200. Correspondingly, the third video stream (and/or the third camera) may be associated with a user interface activity.

It is to be noted that the example described above illustrates three designated activities for three cameras and three video streams for brevity, but this should not be taken as limiting. Noting that the plurality of cameras and the plurality of video streams described herein may include further cameras and correspondingly further video streams, which may be associated with further designated user activities.

In accordance with various aspects provided herein, the processor 201 may select one or more video streams from the plurality of video streams available to the SST 200 based on the determined activity of the user. The selection based on a determined activity of the user may include selecting one or more video streams that are associated with one or more user activities that match (and/or according to a mapping operation that is mapped with) the determined activity of the user.

For example, the processor 201 may identify one or more user activities that are mapped to the determined activity of the user based on the activity mapping information stored in the memory 202. The processor 201 may accordingly select the one or more video streams that are associated with the identified one or more user activities. Through this selection, the processor 201 may select one or more video streams according to the activity of the user.

In the illustrated example described above including three video streams and three designated user activities, in operation, the user may interact with the item scanning device 211 by scanning an item. The item scanning device 211 may send information about a scanned item, which may indicate an interaction of the user with the item scanning device 211. Accordingly, the processor 201 may determine the activity of the user as a scanning activity. Correspondingly, the processor 201 may select the first video stream.

In accordance with various aspects described herein, the processor 201 may generate display data including visual data received from the selected one or more video streams to cause the display device 214 to display video images captured by the respective cameras of the selected one or more video streams, which are selected according to the determined activity of the user. The processor 201 may send the generated display data via the display interface 310 to the display device 214.

In some examples, the display data may further include together with the visual data of the selected one or more video streams (i.e. video images captured by the respective cameras of the selected one or more video streams) self-service GUI data, which may be referred to as self-service interface data. The self-service interface data may include a GUI including transaction-related information provided by the SSA functions of the processor 201.

For this purpose, the processor 201 may perform operations with the OS functions, the SSA functions, and the SMA functions to generate the display data. For example, the OS functions may cause the processor 201 to coordinate interactions within the SST 200 to obtain transaction-related information (i.e. from the SSA functions) and visual data of selected one or more video streams (i.e. from the SMA functions), and combine received transaction-related information and the visual data on the GUI. Illustratively, through interactions of the user with the SST 200 for the transaction, such as scanning items, selecting options from the user interface, and the like, the SSA functions may generate transaction-related information to be displayed to the user. Furthermore, the SMA functions may provide video images received from the visual data to be displayed to the user on the same GUI. As the transaction unfolds, the processor 201 may dynamically adjust the transaction-related information to be displayed, reacting to user interactions and operations of the SST 200.

In some examples, the transaction-related information may include i) scanned items, which may be structured as a list or visual representation of items scanned by the user during the transaction, which may illustratively include item names, descriptions, prices, and quantities; ii) total amount due, which may include a cumulative cost of all scanned items until that instance of time, which may include taxes or discounts; iii) payment options including prompts or menus to present various payment methods available for the user to choose from, such as credit/debit card, cash, mobile payments, or other forms of payment accepted by the SST 200; iv) confirmation prompts which may include instructions or prompts to guide the user to finalize and/or confirm the transaction before finalizing the payment, which may illustratively include prompts to review the items, confirm the total amount, or proceed with the payment process; v) error messages or alerts; vi) transaction status updates, which may include real-time or near-real-time updates on the progress of the transaction, which may illustratively include an indication of steps completed or pending actions required from the user; vii) receipt options which may include prompts asking the user if a printed or electronic receipt is wanted; viii) assistance instructions which may include information or prompts to guide the user on how to seek assistance or call for help.

The processor 201 may generate the display data including the visual data of the selected one or more video streams and the transaction-related information, such that the visual data of the selected one or more video streams are displayed at one portion of display device 214 at a position and size designated for displaying video streams (e.g. within a rectangle on the right bottom part of displayed image), and such that the transaction-related information is displayed at another portion of the display device at a position and size designated for displaying the transaction-related information. The positions and sizes may be arranged such that the transaction-related information and the visual data are displayed on the display device in a non-overlapping manner.

In accordance with various aspects described herein, the processor 201 may generate first display data including visual data of selected one or more video streams and second display data including the visual data of selected one or more video streams together with the self-service GUI data. Illustratively, the processor 201 may cause the display interface 310 to provide the first display data to the external display device (e.g. a security monitor which may be attached to the housing of the SST 200 (e.g. above the SST 200)). The processor 201 may further cause the display interface 310 to provide the second display data to the display device of the SST 200 (e.g. touch screen display). Accordingly, while the user interacting with the SST 200 may see visual data of selected video streams, the external security monitor may also visualize the visual data of selected video streams, illustratively for a monitoring of the retail operator.

In accordance with various aspects described herein, the processor 201 may monitor for activities of the user. In other words, the processor 201 may continuously or periodically perform above-mentioned methods to determine activities of the user, which may be performed starting from a beginning of the transaction and/or an entering of a user within the operation area of the SST 200. In some examples, the processor 201 may perform these methods 201 until the transaction performed on the SST 200 is complete or an identification of the user associated with transaction leaving the operation area of the SST 200.

Through monitoring activities of the user, the processor 201 may adaptively select one or more video streams based on determined activities of the user during the monitoring of the user and dynamically change selected one or more video streams in response to a change of determined activities of the user. Correspondingly, the visual data included in the generated display data changes dynamically based on a change of the determined activity of the user from a previously determined activity to a current determined activity.

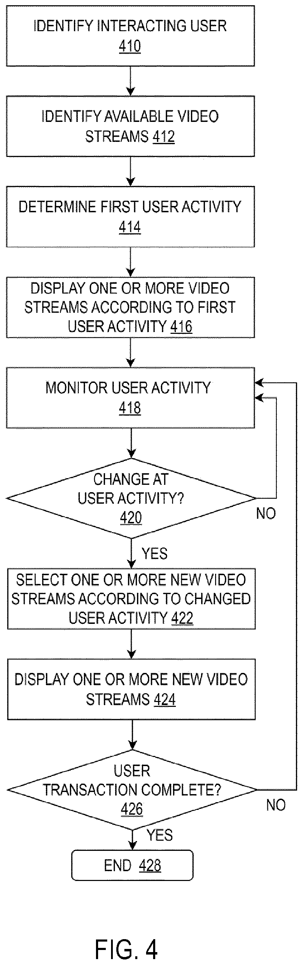

FIG. 4 shows an illustrative example of a flow diagram, which the SST 200 may perform in accordance with various aspects described herein. It is to be noted that the flow diagram is described in accordance with the illustrative example described in accordance with aspects of FIG. 3 including three video streams associated with three designated user activities.

In 410, the processor 201 may identify a presence of a user that may interact with the SST 200. The processor 201 may identify the presence of the user based on an indication received from the I/O interface 320 (e.g. a user begins scanning a first item at the item scanning device 211). In some examples, the processor 201 may identify the presence of the user by processing visual data (e.g. via image processing methods) or sensor data by identify a user entering into the operation area of the SST 200.

In 412, the processor 201 may identify video streams available to the SST 200 to for determination of user activity. In some examples, all video streams within the retail environment may be available to the SST 200. In some examples, only a subset of video streams may be designated for the SST 200. The processor 201 may determine respective designated user activities associated with available video streams. Referring to the above-mentioned illustrative example, the processor 201 may identify the first video stream, the second video stream, and the third video stream, and determine their designated user activities, namely the item scanning activity, the item bagging activity, and the user interface activity respectively.

In 414, the processor 201 may determine a first user activity of the user interacting with the SST 200. For example, the processor 201 may determine the first user activity as the item scanning activity according to information received from the I/O interface 220, which indicates that the user has scanned an item. The processor 201 may accordingly determine that the designated user activity of the first video stream matches the item scanning activity. Accordingly, the processor 201 may select the first video stream. The processor 201 may store the first determined activity in the memory 202.

It is to be noted that in some examples the SST 200 may receive video streams selectively. For this purpose, the processor 201 may cause the communication interface 203 to receive the first video stream from a source of the video stream. This may include establishing a connection with the first camera providing visual data of the first video stream. Further, the processor 201 may encode information to be sent to the corresponding camera indicating a connection request. Through establishing of a connection, the processor 201 may start receiving the first video stream from the first camera. In some examples, the SST 200 may receive the first video stream (and optionally all available video streams) from a video server. In this example, the processor 200 may communicate with the video server over an established connection to receive the first video stream. For example, the processor 200 may send information including a request of receiving the first video stream. Illustratively, the information may include an identifier of the first video stream and/or an identifier of the first camera. Accordingly, the SST 200 may receive visual data of the first video stream.

In 416, the processor 201 may start generating display data including the visual data received from the first video stream. As illustrated herein, the generated display data may further include transaction-related information. Accordingly, the SST 200 may start displaying the visual data received from the first video stream on the display device 214.

In accordance with various aspects described herein, the processor 201 may further encode information representing selected one or more video streams for a transmission to an external entity external to the SST 200. Accordingly, in 416, the processor 201 may encode also the information and instruct the communication interface 203 to send the information to the external entity.

In 418, the processor 201 may monitor activities to determine further activities for the user. Illustratively, the processor 201 may monitor information received from the I/O interface 320, which may indicate further interactions of the user with the SST 200. Additionally, or alternatively, the processor 201 may monitor received sensor data and/or visual data of available cameras, which may indicate further interactions of the user with the SST 200. Through monitoring of activities, the processor 201 may determine whether there is a change at a previously determined activity of the user. Illustratively, noting that the previously determined activity of the user includes a first designated activity, the processor 201 determines whether a second designated activity is determined that is different from the first designated activity. If the processor 201 determines that there is no change at the determined activity of the user, the processor 201 may keep monitoring user activity in 418.

If the processor 201 determines that there is a change at the determined activity of the user, in 422, the processor 201 may select one or more new video streams that are different from previously selected one or more video streams according to the current determined activity of the user that is different from the previously determined activity of the user. According to the illustrative example, the processor 201 may determine the current activity of the user as the user interface activity based on information received from the I/O interface 320 (e.g. touch screen display sending a user input). The processor 201 may determine that the designated user activity of the third video stream matches the user interface activity. Accordingly, the processor 201 may select the third video stream. The processor 201 may store the current determined activity in the memory 202. Furthermore, the SST 200 may perform operations described for receiving of the first video stream similarly to receive the second video stream (e.g. from the second camera or from the video server).

In 424, the processor 201 may start generating display data including the visual data received from the third video stream. As illustrated herein, the generated display data may further include transaction-related information. Accordingly, the SST 200 may start displaying the visual data received from the third video stream on the display device 214. As described above, the processor 201 may provide generated display data including (only) selected video streams (e.g. referred to as the first display data) to an external display device (e.g. a security monitor) and/or may provide generated display data including selected video streams and the transaction-related information (e.g. referred to as the second display data) to an integrated display device of the SST 200 over the GUI, in a manner that the size and the position associated with displayed video streams and transaction-related information section are configurable, either to only one of them or both of them according to a designated display configuration.

In accordance with various aspects described herein, the processor 201 may further encode information representing selected one or more video streams for a transmission to an external entity external to the SST 200. Accordingly, in 424, the processor 201 may encode also the information and instruct the communication interface 203 to send the information to the external entity.

In 426, the processor 201 may determine whether the transaction of the user performed at the SST 200 is complete. If the processor 201 determines that the transaction of the user is not complete, the processor 201 may go back to 418 and start monitoring user activity. If the processor 201 determines that the transaction is complete, the processor 201 may end the flow. In an example, the processor 201 may cause visual data of one or more predefined video streams (e.g. visual data of a predefined camera, such as the camera provided above the SST 200) or may cause visual data of randomly selected video streams to be displayed on one or all of the display devices 214 when the transaction ends.

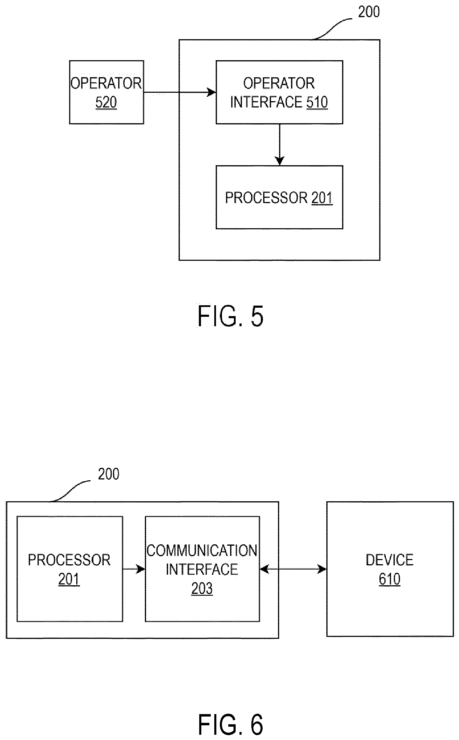

FIG. 5 schematically shows an SST including an operator interface. In some aspects, user activities associated with the video streams (and/or cameras) may be defined by an authorized retail operation such as an attendant or an operator. As described herein, each video stream of the plurality of video streams and/or respective cameras may be associated with a designated user activity. A designation of a video stream may be made according to the FoV captured by the respective camera providing visual data of the stream. For example, the camera configured to capture the item scanning device 211 and its designated proximity may be associated with the item scanning activity. Similarly, the camera configured to capture the facial expressions of the user may be associated with the user interface activity due to its FoV arranged to capture facial expressions when the user interacts with the user interface.

It may be desirable to provide a flexibility to the surveillance system through different designation of user activities for the video streams and/or the cameras. For this purpose, the processor 201 may be configured to execute an operator interface application including instructions that may cause the processor 201 to provide an output indicative of current designations of user activities associated with the video streams and/or cameras, available designations of user activities (e.g. the plurality of predefined user activities), and receive an input from the operator indicating a selection of a designated user activity from a plurality designated user activities for at least one video stream and/or camera of the plurality of video streams and/or the plurality of cameras.

An attendant/operator 520 may define the use-case of a camera thereby assigning a designated activity for a video stream and/or camera and may provide information representing a designated activity for that video stream and/or camera to the processor 201 through an operator interface 510 of the SST 200. Illustratively, a first video stream provided by a first camera may be attributed to a first designated activity. The first designated activity may be an item scanning activity. Through the operator interface 510, the operator 520 may change the designated activity of the first video stream provided by the first camera from the first designated activity to a second designated activity. For example, the second designated activity may be a user interface activity. The skilled person would recognize the possibility of further examples in the context where there are more cameras in which each camera is associated with a certain use-case attributed to a corresponding activity associated with the transaction.

In some examples, the operator interface 510 may further be configured to interface an operator to selectively access visual data of at least one stream of the plurality of streams received by the video interface. The attendant/operator 520 may access to the operator interface 510 via established connections with further devices as described below (e.g. further SSTs within the retail environment, a mobile device, a device of a security monitoring system, etc.). Illustratively, the SMA functions of the processor 201 may provide visual data of streams selected by the attendant/operator 520 through the operator interface 510, and the processor 501 may generate information representing the visual data of the streams selected by the by the attendant/operator 520 for a transmission to the corresponding further device. Illustratively, the attendant/operator 520 who is watching the operation area of the SST 200 (e.g. the operation area 121) may remotely access the visual data and visualize the video stream of other SSTs within the retail environment if required (e.g. the attendant/operator 520 is suspicious of activities performed by a user). The attendant/operator 520 may illustratively switch between video streams (e.g. cameras providing corresponding video streams).

FIG. 6 shows schematically an illustrative example of an established connection between the SST 200 and a further device 610. In accordance with various aspects described herein, the SST 200 may communicate with further devices, via the communication interface 203, to receive and/or send communication signals including various types of information. The further device 610 may accordingly be any device described in this disclosure with which the SST 200 may communicate to exchange information.

In some examples, the further device 610 may include at least one of: a further SST within the retail environment, a mobile device which may include illustratively a smart phone, a tablet, a personal digital assistant, etc., an external security monitor external to the SST, a device of a security monitoring system of the retail environment, a video server, a remote server, etc.

In accordance with various aspects provided herein, the processor 201 may encode information representing the selected one or more video streams to inform the further device of the selection. Noting that through selection of one or more video streams based on determined user activities dynamically, the SST 200 may have identified visual data that are likely be considered as very relevant during the interaction of the user with the SST 200. For example, monitoring of visual data of selected one or more video streams for a corresponding period of time may be prioritized, as they represent a dynamic monitoring of the user according to activities of the user, in view of less-relevant visual data (e.g. non-selected video streams within that period of time).

For example, instead of monitoring all available video streams, a security operator may only monitor selected video streams of the SST. Noting that the retail environment may include multiple SSTs and many cameras, a selective monitoring as described herein may reduce cost and complexity of real-time monitoring. In some examples, all video streams may still be stored by the security monitoring system for evidence purposes. In some examples, the security monitoring system may be configured to store only selected video streams with respect to monitoring of the operation area of the SSTs within the retail environment.

In some examples, the encoded information representing the selected one or more video streams may include the display data generated by the processor 201, which includes the visual data (e.g. video images) of the selected one or more video streams. Additionally, or alternatively, the encoded information an identifier of the selected one or more video streams and/or respective cameras providing visual data of the selected one or more video streams. For each video stream and/or camera, the identifier may include a text or a number (e.g. camera1, camera2, etc.) that may uniquely identify that particular video stream and/or camera. In some examples, the encoded information may further include timestamps which may indicate at least one of time of capture of visual data, a time of selection, a time on which the processor 201 determines corresponding activity of the user.

For example, in case that the further device 610 is a further SST within the retail environment, an operator within the retail environment may selectively monitor certain SSTs including the SST 200 from the user interface of the further SST to identify any suspicious activity of the user interacting with the SST 200 (and other SSTs of the certain SSTs). Illustratively, the further SST may include features and aspects described herein for the SST 200. The further SST may display one or more video streams being selected dynamically at the SST 200 in real-time on its display during the transaction of the user.

For example, in case that the further device 610 is an external security monitor, viewers of the external security monitor may also view the one or more video streams being selected dynamically by the SST 200 during the transaction of the user. In some examples, the external security monitor may have been deployed within the operation area of the SST 200 (e.g. the security monitor 141). In some examples, the external security monitor may have been deployed within a designated proximity to the SST 200 (e.g. substantially above the SST 200). Noting the presence of multiple SSTs in the operation area 121, an operator may monitor external security monitor or monitors displaying selected video streams of multiple SSTs. Similarly, in case the external security monitor is not viewed from the operation area 121, a security operator designated to monitor the external security monitor may view only video streams being selected by the SST 200 of by multiple STs in the operation area 121. Through reduction of relevant information to be monitored by operators dynamically according to activities of the user, an improved surveillance may be provided.

For example, in case that the further device 610 is a mobile device, the operator may monitor one or more video streams being selected dynamically during the transaction of the user even in case the operator is not present at or around the operation area 121.

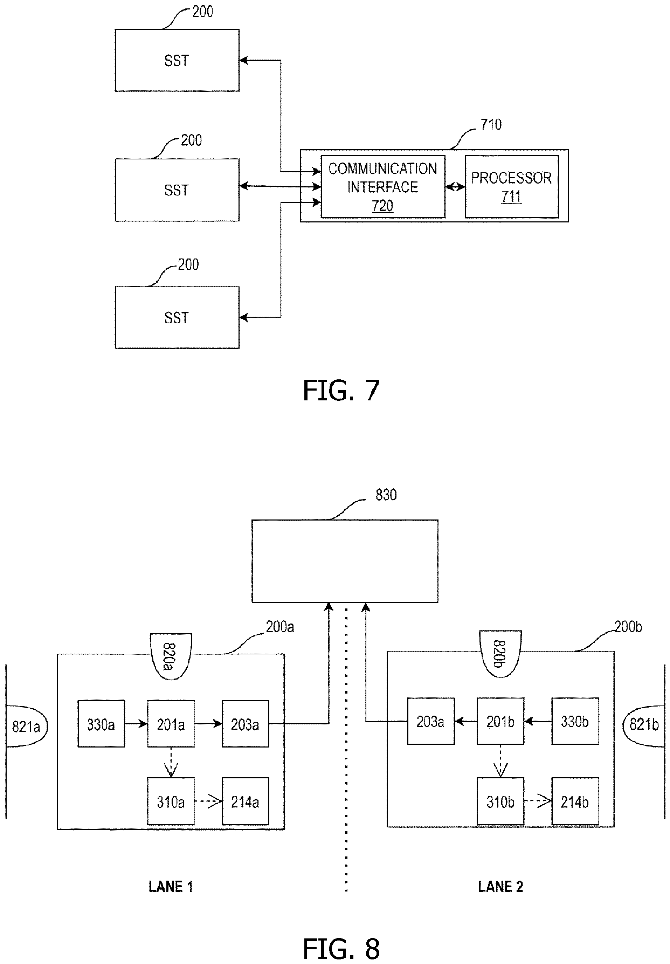

FIG. 7 shows schematically an illustrative example of a system including multiple SSTs. Each SST illustrated herein may incorporate or include features and aspects described for the SST 200. The system may include a monitoring device 710 configured to communicate with each SST 200 of the plurality of SSTs. The monitoring device 710 may be a device of a security monitoring system. The monitoring device 710 may be a central device positioned in a remote location within the retail environment. The monitoring device 710 may illustratively be placed in a management room and may be operated, controlled or viewed by an authorized staff member including a supervisor, an attendant, an operator, etc. The location of the monitoring device 710 may be a remote location not directly observable from a standpoint in the vicinity of SSTs 200. Exemplary, a customer standing on a queue of a lane leading to a corresponding SST 200 may not perceive the existence of the monitoring device 710. Customers taking a tour in the retail environment may also not locate the monitoring device 710 in cases where the device 710 is placed within a closed section that requires necessary credentials to get in.

The monitoring device 710 may include a communication interface 720 configured to transmit and/or receive communication signals including information to/from each SST 200 of the plurality of SSTs. The communication interface 711 may include a transceiver and a port (e.g. an antenna port, an RJ45 port, etc.). The monitoring device 710 may further include a processor 711 with similar or identical features to the processor that the SST 200 includes (e.g., processor 201). The communication between the monitoring device 710 and an SST 200 may be a unidirectional or bidirectional communication.

For example, the monitoring device 710 may be configured to receive information representing video streams being selected by each SST from the plurality of SSTs and store received information. In an example, the received information may include visual data of video streams being selected, and the processor 711 may cause the received visual data to be stored in a memory which may be internal to the monitoring device 710 or external to the monitoring device 710 (e.g. a file server). In an example, the received information may include identifiers of selected video streams and a corresponding time stamp and/or time period associated with the period of time in which the respective video streams are selected by the corresponding SST, and the processor 711 may store such information in the memory as security logs. Illustratively, when needed (e.g. for evidence or for monitoring), an operator may check the security logs and may identify video streams selected for a particular time period and instruct the video server to provide that particular video streams for retrieval.

FIG. 8 shows schematically an illustrative example of a system. A plurality of cameras (e.g. the cameras 131, the cameras 217) may be attributed to each SST of a plurality of SSTs included by the system, and may be deployed to capture video feeds from different operational areas of the corresponding SST. In that sense, each camera of the plurality of cameras may be associated with a certain user activity (e.g., item scanning, item bagging, etc.). In an example, a first SST 200a may be deployed for a first lane from a plurality of lanes within the retail environment. A user may reach the SST 200a from the first lane to perform a transaction. The cameras 820a and 821a may be positioned to capture user activities associated with the transaction. Exemplary, the camera 820a may be a directly positioned IP camera integrated or attached to the SST 200a, and the camera 821a may be a side camera in which each camera is placed to capture video streams associated with a user activity.

The camera 820a may provide a first video stream via a designated interface (e.g. the communication interface or the internal interface) to the SST 200a. The video interface 330a may receive the first video stream accessible by the processor 201a. Similarly, the camera 821a may provide a second video stream via a designated interface (e.g. the communication interface or the internal interface) to the SST 200a. The video interface 330a may receive the second video stream accessible by the processor 201a. In some aspects, the processor 201a may select the first video stream or the second video stream based on the identified user activity that occurred at the SST 200a.

The processor 201a may generate a display data of the selected video stream. In an example, the processor 201a may select the first video stream provided by the camera 820a and generate an associated display data based on the first video stream. The display data may be provided to the display 214a via the display interface 3 10a. In some aspects, the processor 201a may transmit the generated display data to a central device 830 via the communication interface 203a. The central device 830 may include a communication interface to receive the display data. Furthermore, the central device 830 may include a processor, a standalone display interface coupled to a standalone display, a memory, a user interface, a controller, peripheral devices for an operator to interact with the central device 830, etc. In that sense, the central device 830 may display the received display data.

A second SST 200b may be deployed for a second lane from a plurality of lanes within the retail environment. The user may reach the SST 200b from the second lane to perform a checkout process. The cameras 820b and 821b may be positioned to capture user activities associated with the checkout process. Exemplary, the camera 820b may be a directly positioned IP camera integrated or attached to the SST 200b, and the camera 821b may be a side camera in which each camera is placed to capture video streams associated with different user activities.

The camera 820b may provide a third video stream via a designated interface (e.g. the communication interface or the internal interface) to the SST 200b. The video interface 330b may receive the third video stream accessible by the processor 201b. Similarly, the camera 821b may provide a fourth video stream via a designated interface (e.g. the communication interface or the internal interface) to the SST 200b. The video interface 330b may receive the fourth video stream accessible by the processor 201b. In some aspects, the processor 201b may select the third video stream or the fourth video stream based on the identified user activity that occur at the SST 200b.

The processor 201b may generate a display data of the selected video stream. In an example, the processor 201b may select the third video stream provided by the camera 820b and generate associated display data based on the third video stream. The display data may be provided to the display 214b via the display interface 310b. In some aspects, the processor 201b may transmit the generated display data to the central device 830 via the communication interface 203b. In some examples, the central device 830 may include a computer system. The skilled person would recognize that there may be other SSTs capable of providing display data to the central device 830. In that sense, the central device 830 may receive a plurality of display data for displaying in which each display data generated based on a selected video stream is attributed to an identified user activity that occur at the corresponding SST.

In further aspects, there may be cases where at least one of the SSTs may, via the processor 201, detect a change in the user activity. Exemplary, based on the detected change at the SST 200a, the processor 201a may change the selection from the first video stream (received from the camera 820a) to the second video stream (received from the camera 821a). Accordingly, the processor 201a may generate a display data based on the second video stream and may provide the generated display data to the display 214a via the display interface 3 10a, causing a change in displayed visual data at the display 214a. In an aspect, the processor 201a may transmit the generated display data based on the second video stream to the central device 830 via the communication interface 203a. That may cause a change in the displayed visual data -associated with the identified user activity at the SST 200a- on the display of the central device 830.

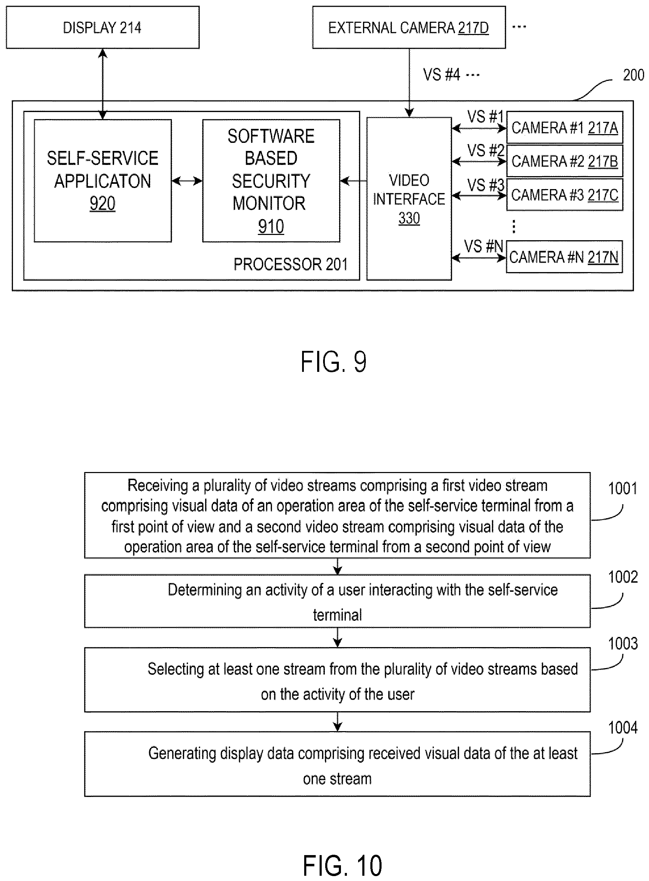

FIG. 9 shows schematically an illustrative example of the SST. In this illustrative example, the processor 201 may execute a software-based security monitor (SBSM) functions 910, which may cause the processor 201 to perform various operations described in this disclosure associated with determination of activities of users, communicating with cameras and/or video server to receive video streams, selection of video streams, etc. Further, the processor 201 may execute self-service application (SSA) functions 920, which may cause the processor 201 to perform various operations described in this disclosure associated with performing transactions, scanning items, communicating with a POS system to receive information about scanned items, performing inventory procedure, performing payment procedure, generating display data, etc.

In this illustrative example, the SST 200 may include a first camera 217A that may provide visual data (e.g. captured video images) of the operation area of the SST 200 from a first PoV via a first video stream, a second camera 217B that may provide visual data (e.g. captured video images) of the operation area of the SST 200 from a second PoV via a second video stream, and a third camera 217C that may provide visual data (e.g. captured video images) of the operation area of the SST 200 from a third PoV via a third video stream. Furthermore, the SST 200 may communicate with an external camera 217D to receive visual data (e.g. captured video images) of the operation area of the SST 200 from a fourth PoV via a fourth video stream. The processor 201 may receive the first, the second, the third, and the fourth video streams via the user interface 330, using SBSM functions 910.

As hinted in the illustration, the number of cameras illustrated herein are exemplary. The SST 200 may include N number of cameras, each associated with a corresponding video stream and providing a corresponding visual data representing captured video images of the corresponding FoV of the corresponding camera. Furthermore, the SST 200 may be configured to receive respective streams of M number of external cameras, each associated with a corresponding video stream and provide a corresponding visual data representing captured video images of the corresponding FoV of the corresponding external camera.

Illustratively, the processor 201 may determine and monitor the activity of an identified user of the SST 200 using the SBSM functions 910. The processor 201 may further select one or more video streams from the first, the second, the third, and the fourth video streams based on determined activities of the user using the SBSM functions 910. Responsive to the selection, the processor 201 may, via the SBSM functions 910, visualize a virtual screen by generating corresponding display data including visual data of the selected one or more video streams. The processor 201 may accordingly include the visual data of the selected one or more video streams into the GUI to be displayed on the display 214.

In some examples, the processor 201 may, via the SBSM functions 910, send the generated display data including the visual data of the selected one or more video streams to an external display, such as a display of a security monitor. Accordingly, the SBSM functions 910 may cause the SST 200 to send via the communication interface 203 the generated display data to the external display. It is to be noted that through selection of the one or more video streams based on determined activities, the processor 201 may, via the SBSM functions 910, depending on the type of activity that the user performs, visualize the selected one or more video streams for determined activities.

In some examples, the processor 201 may, via the SBSM functions 910, provide the operator interface 510. Accordingly, the operator may configure and assign the cameras 217A-D to different designated user activities (e.g. the first camera 217A for idle status, the second camera 217B for item recognition, etc.). The operator may, through the operator interface 510, define and/or assign corresponding user activities to the cameras (i.e. to the video streams).

FIG. 10 shows an example of a method. The method may include receiving 1001 a plurality of video streams comprising a first video stream comprising visual data of an operation area of the self-service terminal from a first point of view and a second video stream comprising visual data of the operation area of the self-service terminal from a second point of view; determining 1002 an activity of a user interacting with the self-service terminal; selecting 1003 at least one stream from the plurality of video streams based on the activity of the user; and generating 1004 display data comprising received visual data of the at least one stream.

In the following, various examples are provided with reference to the aspects described above.

In example 1, the subject matter includes a self-service terminal that may include: a display interface couplable to a display; a video interface configured to receive a plurality of video streams may include a first video stream may include visual data of an operation area of the self-service terminal from a first point of view and a second video stream may include visual data of the operation area of the self-service terminal from a second point of view; a processor configured to: determine an activity of a user interacting with the self-service terminal; select at least one stream from the plurality of video streams based on the activity of the user; generate display data may include received visual data of the at least one stream.

In example 2, the subject matter of example 1 further includes: a user interface accessible to the user; wherein the processor is further configured to identify the activity of the user based on interactions received by the user interface.

In example 3, the subject matter of example 1 or example 2, wherein the processor is further configured to identify the activity of the user based on an image analysis of received visual data from one or more streams of the plurality of streams.

In example 4, the subject matter of any one of examples 1 to 3, wherein the activity of the user includes at least one of a scanning of an item, a bagging of a scanned or non-scanned item; an involvement of a payment procedure, and/or an interaction with a user interface.

In example 5, the subject matter of any one of examples 1 to 4, wherein the display data further includes self-service interface data may include information about interactions of the user with the self-service terminal; wherein the received visual data of the at least one stream is provided at a designated position on the self-service interface data.

In example 6, the subject matter of any one of examples 1 to 5, wherein each received video stream of the plurality of video streams is associated with at least one corresponding user activity; wherein the processor is configured to select the at least one stream based on corresponding user activities of the plurality of video streams that match the activity of the user.

In example 7, the subject matter of example 6, wherein the processor is further configured to monitor activities of the user; wherein the processor is further configured to change selected at least one streams from the plurality of video streams based on a detected change at the monitored activities of the user.

In example 8, the subject matter of example 6 or example 7, wherein the corresponding user activities of the plurality of video streams are defined by an operator of the self-service terminal.

In example 9, the subject matter of any one of examples 6 to 8, wherein the processor is further configured to receive information representing the plurality of video streams and the corresponding user activities of the plurality of video streams, which the information is provided via an operator interface different from the user interface.

In example 10, the subject matter of any one of examples 1 to 9, wherein the processor is configured to execute an application configured to enable the user to interact with the self-service terminal for a transaction of purchased items; wherein the processor is further configured to provide the received visual data of the at least one stream to the application.

In example 11, the subject matter of any one of examples 1 to 10, may further include a communication interface configured to communicate with at least one other self-service terminal, a designated mobile device, or a security monitoring device; wherein the processor is further configured to encode information representative of the received visual data of the at least one stream for a transmission via the communication interface.

In example 12, the subject matter of example 11, wherein the processor is further configured to encode the information representative of the received visual data of the at least one stream for the transmission via the communication interface and send the generated display data to the display via the display interface.

In example 13, the subject matter of any one of examples 1 to 12, may further include: a camera configured to monitor the operation area of the self-service terminal and provide one of the plurality of video streams.

In example 14, the subject matter of any one of examples 1 to 13, may further include: the display, wherein the display is configured to display the generated display data. In a further example, the subject matter of any one of examples 1 to 14 may further include an operator interface configured to interface an operator to selectively access at least one stream of the plurality of streams received by the video interface.

In example 15, a system may include: a plurality of self-checkout terminals, each self-checkout terminal includes the self-service terminal of any one of examples 1 to 14; a security monitoring device configured to communicate with the plurality of self-checkout terminals.

In example 16, the system of example 15, may further include a plurality of cameras deployed in a store environment to monitor the operation area of the plurality of self-checkout terminals, each camera of the plurality of cameras is configured to provide a corresponding video stream of the plurality of video streams.

In example 17, the subject matter includes a method for a self-service terminal, the method may include: receiving a plurality of video streams may include a first video stream may include visual data of an operation area of the self-service terminal from a first point of view and a second video stream may include visual data of the operation area of the self-service terminal from a second point of view; determining an activity of a user interacting with the self-service terminal; selecting at least one stream from the plurality of video streams based on the activity of the user; generating display data may include received visual data of the at least one stream.

In example 18, the subject matter of example 17, may further include: identifying the activity of the user based on interactions received by a user interface.

In example 19, the subject matter of example 17 or example 18, may further include: identifying the activity of the user based on an image analysis of received visual data from one or more streams of the plurality of streams.

In example 20, the subject matter of any one of examples 17 to 19, wherein the activity of the user includes at least one of a scanning of an item, a bagging of a scanned or non-scanned item; an involvement of a payment procedure, and/or an interaction with a user interface.

In example 21, the subject matter of any one of examples 17 to 20, wherein the display data further includes self-service interface data may include information about interactions of the user with the self-service terminal; wherein the received visual data of the at least one stream is provided at a designated position on the self-service interface data.

In example 22, the subject matter of any one of examples 17 to 21, wherein each received video stream of the plurality of video streams is associated with at least one corresponding user activity; wherein the method further includes selecting the at least one stream based on corresponding user activities of the plurality of video streams that match the activity of the user.

In example 23, the subject matter of example 22, may further include: monitoring activities of the user; changing selected at least one streams from the plurality of video streams based on a detected change at the monitored activities of the user.

In example 24, the subject matter of example 22 or example 23, wherein the corresponding user activities of the plurality of video streams are defined by an operator of the self-service terminal.

In example 25, the subject matter of any one of examples 22 to 24, may further include: receiving information representing the plurality of video streams and the corresponding user activities of the plurality of video streams, which the information is provided via an operator interface different from the user interface.

In example 26, the subject matter of any one of examples 17 to 25, may further include: executing an application configured to enable the user to interact with the self-service terminal for a transaction of purchased items; providing the received visual data of the at least one stream to the application.

In example 27, the subject matter of any one of examples 17 to 26, may further include encoding information representative of the received visual data of the at least one stream for a transmission via a communication interface, wherein the communication interface is configured to communicate with at least one other self-service terminal, a designated mobile device, or a security monitoring device.

In example 28, the subject matter of example 27, may further include encoding the information representative of the received visual data of the at least one stream for the transmission via the communication interface and send the generated display data to the display via the display interface.

In example 29, the subject matter of any one of examples 17 to 28, may further include: monitoring, via a camera, the operation area of the self-service terminal and provide one of the plurality of video streams.

In example 30, the subject matter of any one of examples 17 to 29, may further include: the display, wherein the display is configured to display the generated display data. In a further example, the subject matter of any one of examples 17 to 30 may further include an operator interface configured to interface an operator to selectively access at least one stream of the plurality of streams received by the video interface.

In example 31, the subject matter of any one of examples 17 to 30, may further include: communicating, by a security monitoring device, with a plurality of self-checkout terminals to receive displayed video streams of the plurality of self-checkout terminals.

In example 32, the subject matter of any one of examples 17 to 31, may further include monitoring the operation area of the self-service terminal with a plurality of cameras, wherein each camera of the plurality of cameras is configured to provide a corresponding video stream of the plurality of video streams.

In example 33, a non-transitory computer-readable medium may include instructions which, if executed by a processor, cause the processor to perform the subject matter of any one of examples 17 to 32.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A self-service terminal comprising:
a display interface couplable to a display;
a video interface configured to receive a plurality of video streams comprising a first video stream comprising visual data of an operation area of the self-service terminal from a first point of view and a second video stream comprising visual data of the operation area of the self-service terminal from a second point of view;
a processor configured to:
determine an activity of a user interacting with the self-service terminal;
select at least one stream from the plurality of video streams based on the activity of the user;
generate display data comprising received visual data of the at least one stream.

2. The self-service terminal of claim 1 further comprises:
wherein the processor is further configured to identify the activity of the user based on interactions of the user with the self-service terminal;
wherein the interactions are detected based on at least one of sensors of the self-service terminal or a user interface of the self-service terminal.

3. The self-service terminal of claim 1 or claim 2,
wherein the processor is further configured to identify the activity of the user based on an image analysis of received visual data from one or more streams of the plurality of streams.

4. The self-service terminal of any one of claims 1 to 3,
wherein the activity of the user comprises at least one of a scanning of an item, a bagging of a scanned or non-scanned item; an involvement of a payment procedure, and/or an interaction with a user interface.

5. The self-service terminal of any one of claims 1 to 4,
wherein the display data further comprises self-service interface data comprising information about interactions of the user with the self-service terminal;
wherein the received visual data of the at least one stream is provided at a designated position on the self-service interface data.

6. The self-service terminal of any one of claims 1 to 5,
wherein each received video stream of the plurality of video streams is associated with at least one corresponding user activity;
wherein the processor is configured to select the at least one stream based on corresponding user activities of the plurality of video streams that match the activity of the user.

7. The self-service terminal of claim 6,
wherein the processor is further configured to monitor activities of the user;
wherein the processor is further configured to change selected at least one streams from the plurality of video streams based on a detected change at the monitored activities of the user.

8. The self-service terminal of claim 6 or claim 7,
wherein the processor is further configured to receive information representing the plurality of video streams and the corresponding user activities of the plurality of video streams, which the information is provided via an operator interface different from the user interface.

9. The self-service terminal of any one of claims 1 to 8,
wherein the processor is configured to execute an application configured to enable the user to interact with the self-service terminal for a transaction of purchased items;
wherein the processor is further configured to provide the received visual data of the at least one stream to the application.

10. The self-service terminal of any one of claims 1 to 9,
further comprising a communication interface configured to communicate with at least one other self-service terminal, a designated mobile device, or a security monitoring device;
wherein the processor is further configured to encode information representative of the received visual data of the at least one stream for a transmission via the communication interface.

11. The self-service terminal of claim 10,
wherein the processor is further configured to encode the information representative of the received visual data of the at least one stream for the transmission via the communication interface and send the generated display data to the display via the display interface.

12. The self-service terminal of any one of claims 1 to 11, further comprising:
the display configured to display the generated display data;
an operator interface configured to interface an operator to selectively access at least one stream of the plurality of streams received by the video interface.

13. A system comprising:
a plurality of self-checkout terminals, each self-checkout terminal comprises the self-service terminal of any one of claims 1 to 12;
a security monitoring device configured to communicate with the plurality of self-checkout terminals.

14. The system of claim 13,
further comprising a plurality of cameras comprising first one or more cameras deployed in a store environment to monitor the operation area of the plurality of self-checkout terminals and second one or more cameras included by the plurality of self-checkout terminals, each camera of the plurality of cameras is configured to provide a corresponding video stream of the plurality of video streams.

15. A method for a self-service terminal, the method comprising:
receiving a plurality of video streams comprising a first video stream comprising visual data of an operation area of the self-service terminal from a first point of view and a second video stream comprising visual data of the operation area of the self-service terminal from a second point of view;
determining an activity of a user interacting with the self-service terminal;
selecting at least one stream from the plurality of video streams based on the activity of the user;
generating display data comprising received visual data of the at least one stream.

## Amended claims

### Amended claims in accordance with Rule 137(2) EPC.

1. A self-service terminal (101, 200, 200a, 200b) comprising:
a display interface (310) couplable to a display (147, 214);
a video interface (330) configured to receive a plurality of video streams comprising a first video stream comprising visual data of an operation area of the self-service terminal (101, 200, 200a, 200b) from a first point of view and a second video stream comprising visual data of the operation area of the self-service terminal (101, 200, 200a, 200b) from a second point of view;
a processor (201) configured to:
determine an activity of the user (102) interacting with the self-service terminal (101, 200, 200a, 200b);
select at least one stream from the plurality of video streams based on the activity of the user (102);
generate display data comprising received visual data of the at least one stream,
wherein the processor (201) is further configured to identify the activity of the user based on interactions of the user with the self-service terminal;
wherein the interactions are detected based on at least one of sensors of the self-service terminal or a user interface of the self-service terminal.

2. The self-service terminal (101, 200, 200a, 200b) of claim 1,
wherein the processor (201) is further configured to identify the activity of the user (102) based on an image analysis of received visual data from one or more streams of the plurality of streams.

3. The self-service terminal (101, 200, 200a, 200b) of any one of claims 1 to 2,
wherein the activity of the user (102) comprises at least one of a scanning of an item, a bagging of a scanned or non-scanned item; an involvement of a payment procedure, and/or an interaction with a user interface.

4. The self-service terminal (101, 200, 200a, 200b) of any one of claims 1 to 3,
wherein the display data further comprises self-service interface data comprising information about interactions of the user (102) with the self-service terminal (101, 200, 200a, 200b);
wherein the received visual data of the at least one stream is provided at a designated position on the self-service interface data.

5. The self-service terminal (101, 200, 200a, 200b) of any one of claims 1 to 4,
wherein each received video stream of the plurality of video streams is associated with at least one corresponding user activity;
wherein the processor (201) is configured to select the at least one stream based on corresponding user activities of the plurality of video streams that match the activity of the user (102).

6. The self-service terminal (101, 200, 200a, 200b) of claim 5,
wherein the processor (201) is further configured to monitor activities of the user (102);
wherein the processor (201) is further configured to change selected at least one streams from the plurality of video streams based on a detected change at the monitored activities of the user (102).

7. The self-service terminal (101, 200, 200a, 200b) of claim 5 or claim 6,
wherein the processor (201) is further configured to receive information representing the plurality of video streams and the corresponding user activities of the plurality of video streams, which the information is provided via an operator interface (510) different from the user interface.

8. The self-service terminal (101, 200, 200a, 200b) of any one of claims 1 to 7,
wherein the processor (201) is configured to execute an application configured to enable the user (102) to interact with the self-service terminal (101, 200, 200a, 200b) for a transaction of purchased items;
wherein the processor (201) is further configured to provide the received visual data of the at least one stream to the application.

9. The self-service terminal (101, 200, 200a, 200b) of any one of claims 1 to 8,
further comprising a communication interface (203, 203a, 203b) configured to communicate with at least one other self-service terminal (101, 200, 200a, 200b), a designated mobile device, or a security monitoring device (141, 146);
wherein the processor (201) is further configured to encode information representative of the received visual data of the at least one stream for a transmission via the communication interface (203, 203a, 203b).

10. The self-service terminal (101, 200, 200a, 200b) of claim 9,
wherein the processor (201) is further configured to encode the information representative of the received visual data of the at least one stream for the transmission via the communication interface (203, 203a, 203b) and send the generated display data to the display (147, 214) via the display interface (310).

11. The self-service terminal (101, 200, 200a, 200b) of any one of claims 1 to 10, further comprising:
the display (147, 214) configured to display the generated display data;
an operator interface (510) configured to interface an operator to selectively access at least one stream of the plurality of streams received by the video interface (330).

12. A system comprising:
a plurality of self-checkout terminals, each self-checkout terminal comprises the self-service terminal (101, 200, 200a, 200b) of any one of claims 1 to 11;
a security monitoring device (141, 146) configured to communicate with the plurality of self-checkout terminals.

13. The system of claim 12,
further comprising a plurality of cameras (131, 217, 820a, 820b, 821a, 821b) comprising first one or more cameras (131) deployed in a store environment to monitor the operation area of the plurality of self-checkout terminals and second one or more cameras (131) included by the plurality of self-checkout terminals, each camera (131, 217, 820a, 820b, 821a, 821b) of the plurality of cameras (131, 217, 820a, 820b, 821a, 821b) is configured to provide a corresponding video stream of the plurality of video streams.

14. A method for a self-service terminal (101, 200, 200a, 200b), the method comprising:
receiving a plurality of video streams comprising a first video stream comprising visual data of an operation area of the self-service terminal (101, 200, 200a, 200b) from a first point of view and a second video stream comprising visual data of the operation area of the self-service terminal (101, 200, 200a, 200b) from a second point of view;
determining an activity of a user (102) interacting with the self-service terminal (101, 200, 200a, 200b);
selecting at least one stream from the plurality of video streams based on the activity of the user (102);
generating display data comprising received visual data of the at least one stream,
wherein the method further comprises identifying the activity of the user based on interactions of the user with the self-service terminal;
wherein the interactions are detected based on at least one of sensors of the self-service terminal or a user interface of the self-service terminal.
